# FASCICULE DE BREVET EUROPEEN

(11) **EP 4 391 150 B1**
(45) Date de publication et mention de la délivrance du brevet: **05.08.2026**
(21) Numéro de dépôt: 23217886.3
(22) Date de dépôt: 19.12.2023
(51) Int. Cl.: H01M 10/613, H01M 10/625, H01M 50/204, H01M 50/249, H01M 50/264, H01M 50/289

(54) **ENSEMBLE DE BATTERIE, SYSTÈME ET PROCÉDÉ DE FABRICATION ASSOCIÉS**
BATTERIEANORDNUNG, SYSTEM UND VERFAHREN ZUR HERSTELLUNG DAVON
BATTERY ASSEMBLY, SYSTEM AND METHOD FOR MANUFACTURING THE SAME

(30) Priorité: 20.12.2022 FR 2213965
(43) Date de publication de la demande: 26.06.2024
(73) Titulaire: SAFT, 92300 Levallois-Perret (FR)
(72) Inventeur: GABILLET, Quentin, 33290 LUDON MEDOC (FR); TANGUY, Ronan, 33150 CENON (FR); DIOT, Christophe, 33290 PAREMPUYRE (FR); BENAIM, Julien, 33670 MADIRAC (FR); ZORDAN, Jérôme, 33380 MIOS (FR); FRECHOU, Jean-Christophe, 33320 LE TAILLAN MEDOC (FR)
(74) Mandataire: Lavoix

(56) Documents cités:
- EP-A1- 3 553 876
- EP-A1- 3 937 273
- EP-A1- 4 068 480
- WO-A1-2011/134815
- DE-A1- 102016 125 697
- DE-A1- 102016 213 832
- DE-U1- 202020 104 925
- US-A1- 2018 154 754
- US-A1- 2022 209 348
- US-A1- 2022 209 357

## Description

La présente invention concerne un ensemble de batterie comprenant au moins un assemblage de modules électrochimiques de batterie, chaque module électrochimique de batterie comportant une pluralité d'éléments électrochimiques de batterie, et un coffre de réception de l'au moins un assemblage.

Un tel ensemble de batterie est destiné au stockage d'énergie électrique et est typiquement destiné à être installé dans une baie de stockage électrique au sol ou à bord d'un véhicule, en particulier un véhicule ferroviaire.

Un exemple d'ensemble de batterie est donné dans CN207217634U.

DE 20 2020 104925 U1 divulgue un boîtier comprenant un fond, un couvercle et des parois latérales.

US 2018/154754 A1 divulgue un appareil configuré pour recevoir une batterie d'un véhicule.

DE 10 2016 125697 A1 divulgue un support de batterie destiné à porter une pluralité de modules de batterie.

DE 10 2016 213832 A1 divulgue un boîtier de batterie.

Usuellement, il est nécessaire d'associer de nombreux accessoires externes sur de tels ensembles de batterie, par exemple des éléments de fixation de l'ensemble, des boîtiers d'alimentation, des joints externes d'étanchéité, etc. Ces accessoires externes doivent notamment être agencés sur l'ensemble de batterie tout en réduisant tant que possible l'encombrement, notamment lorsque l'ensemble de batterie est embarqué dans un véhicule.

Cependant, la géométrie complexe des ensembles de batterie, notamment de leurs interfaces externes, rendent difficile l'agencement des accessoires externes sur l'ensemble. Ceci nécessite alors de designer des accessoires externes spécifiques, de générer un encombrement supplémentaire aux abords de l'ensemble et/ou d'adapter l'ensemble de batterie aux accessoires externes. Ceci est complexe, long et coûteux.

Outre l'encombrement, l'intégration de tels ensembles dans des véhicules ferroviaires impose par ailleurs des qualifications notamment en terme de contraintes mécaniques, de résistance au feu, de refroidissement et plus généralement de sécurité. Si la structure de l'ensemble est modifiée significativement d'un type de véhicule ferroviaire à l'autre, les qualifications doivent être réobtenues pour chaque nouveau véhicule.

Un but de l'invention est de fournir un ensemble de batterie présentant une géométrie simple et permettant l'agencement aisé d'accessoires externes dans des espaces de réception de géométries variées, tout en limitant le temps et le coût de requalification.

A cet effet, l'invention a pour objet un ensemble de batterie selon la revendication 1.

L'ensemble de batterie selon l'invention est selon l'une ou plusieurs des revendications 2 à 9, prise(s) isolément ou suivant toute combinaison techniquement possible.

L'invention a également pour objet un système selon la revendication 10.

L'invention a en outre pour objet un procédé de fabrication selon la revendication 11.

Le procédé de fabrication selon l'invention peut comprendre l'une ou plusieurs des caractéristiques suivantes, prise(s) isolément ou suivant toute combinaison techniquement possible :
- les cloisons latérales sont formées par extrusion d'un profilé ;
- le procédé comprend la fabrication d'au moins un premier ensemble de batterie et d'au moins un deuxième ensemble de batterie par assemblage, notamment par vissage, du support inférieur, des cloisons latérales et du capot supérieur et par formation et agencement de l'au moins un assemblage de modules électrochimiques de batterie dans l'espace de réception,
le premier ensemble de batterie ayant au moins une dimension, notamment une longueur, une largeur ou/et une hauteur, différente d'au moins 5% de la dimension correspondante du deuxième ensemble de batterie, les cloisons latérales du premier ensemble de batterie étant obtenues par extrusion d'un profilé de section identique à la section du profilé extrudé pour former les cloisons latérales du deuxième ensemble de batterie.

L'invention sera mieux comprise à la lecture de la description qui va suivre, donnée uniquement à titre d'exemple, et faite en se référant aux dessins annexés, sur lesquels :
- la figure 1 est une vue schématique en éclaté et en perspective d'un système selon l'invention, comprenant deux ensembles de batterie superposés l'un sur l'autre ;
- la figure 2 est une vue schématique en perspective d'un ensemble de batterie selon l'invention ;
- la figure 3 est une vue schématique d'une coupe III suivant un plan transversal médian d'un ensemble de batterie du système de la figure 1, selon l'invention ;
- la figure 4 est une vue agrandie d'une portion IV de la figure 3 ;
- la figure 5 est une vue en perspective partielle d'un ensemble de batterie du système de la figure 1, selon l'invention, dans laquelle certains modules électrochimiques de batterie ont été omis.
- la figure 6 est un logigramme illustrant un procédé de fabrication d'un ensemble de batterie de la figure 1.

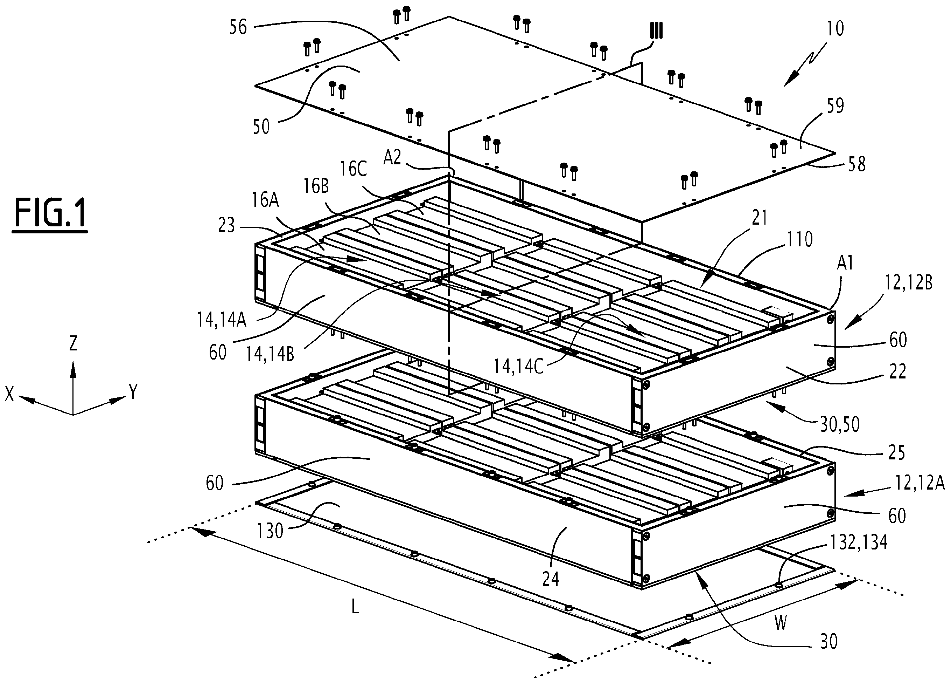

Un système 10 d'ensembles de batterie 12 selon l'invention est illustré sur la figure 1.

Le système 10 comprend au moins un ensemble de batterie 12, notamment au moins deux ensembles de batterie 12.

Selon l'exemple illustré sur la figure 1, le système 10 comprend un premier ensemble de batterie 12A et un deuxième ensemble de batterie 12B.

Les premier 12A et deuxième 12B ensembles de batterie sont superposés selon une direction verticale Z.

Selon l'exemple de la figure 1, un support inférieur 30 (défini plus en détails ci-dessous) du deuxième ensemble 12B est un capot supérieur 50 (défini plus en détails ci-dessous) du premier ensemble 12A.

Dans ce qui suit, sauf lorsque mentionné autrement, on décrit un seul ensemble de batterie 12. Il est bien sûr entendu que la description s'applique à chaque ensemble de batterie 12.

L'ensemble de batterie 12 comprend au moins un assemblage 14 de modules électrochimiques 16 de batterie et un coffre 20 de réception du ou de chaque assemblage 14. Selon l'exemple illustré sur la figure 1, chaque ensemble 12A, 12B comprend un pluralité d'assemblages 14, notamment trois assemblages 14A, 14B, 14C formant chacun une rangée de modules électrochimiques de batteries.

L'ensemble de batterie 12 est destiné au stockage et à la fourniture d'énergie électrique.

L'ensemble de batterie 12 est par exemple destiné à être installé dans une baie de stockage électrique au sol. En variante, l'ensemble de batterie est destiné à être embarqué dans un véhicule, notamment un véhicule ferroviaire, naval ou/et aérien. L'ensemble de batterie 12 est destiné à s'adapter à l'espace disponible au sein du véhicule, tout en permettant sa connexion mécanique, électrique et thermique au sein du véhicule.

Dans ce qui suit, sauf lorsque mentionné autrement, on décrit un seul assemblage 14 de modules électrochimiques 16 de batterie. Il est bien sûr entendu que la description s'applique à chaque assemblage 14.

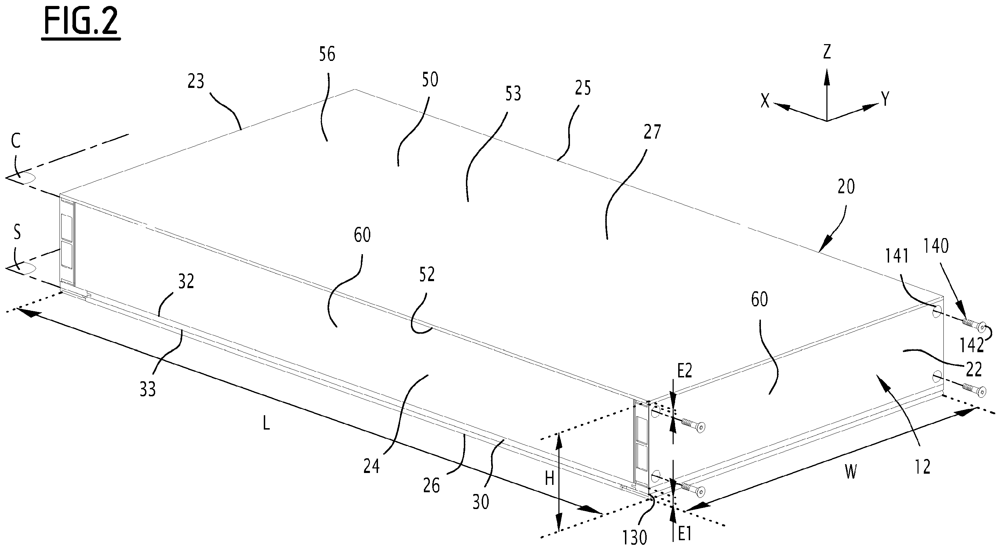

L'assemblage 14 comporte une pluralité de modules électrochimiques 16 de batterie, notamment de batterie au lithium. Sur l'exemple des figures 1 et 2, chaque assemblage 14A, 14B, 14C comprend trois modules électrochimiques 16A, 16B, 16C.

En référence à la figure 2, le coffre 20 s'étend :
- selon une direction longitudinale X entre une première extrémité longitudinale 22 et une deuxième extrémité longitudinale 23 ;
- selon une direction transversale Y entre une première extrémité transversale 24 et une deuxième extrémité transversale 25 ;
- selon la direction verticale Z entre une première extrémité verticale 26 et une deuxième extrémité verticale 27.

Le coffre 20 présente :
- une longueur L, mesurée selon la direction longitudinale X entre ses extrémités longitudinales 22, 23, généralement comprise entre 800 mm et 1 600 mm ;
- une largeur W, mesurée selon la direction transversale Y entre ses extrémités transversales 24, 25, comprise généralement entre 600 mm et 1 800 mm ; et
- une profondeur H, mesurée selon la direction verticale Z entre ses extrémités verticales 26, 27, comprise généralement entre 100 mm et 200 mm.

Le coffre 20 comporte un support inférieur 30, un capot supérieur 50 et des cloisons latérales 60 définissant entre eux un espace 21 de réception du ou de chaque assemblage 14 de modules électrochimiques 16 de batterie.

Au moins l'un parmi le support inférieur 30, le capot supérieur 50 et les cloisons latérales 60 est réalisé en métal, de préférence en aluminium. Cette caractéristique permet de tirer avantage de la légèreté de l'aluminium afin de réduire la masse du coffre, de sa conduction thermique afin d'évacuer la chaleur générée par les assemblages 14 de modules électrochimiques 16 de batterie et de sa conduction électrique afin de constituer un chemin de masse électrique.

Comme illustré sur l'exemple de la figure 1, le coffre 20 comporte quatre cloisons latérales 60. Sur cet exemple, le support inférieur 30, le capot supérieur 50 et les quatre cloisons latérales 60 forment un pavé creux.

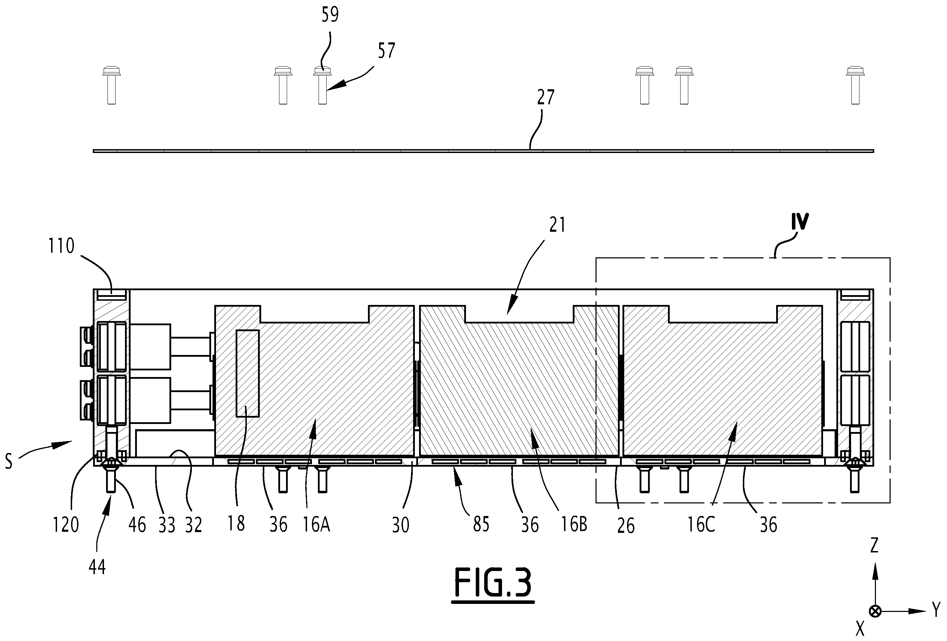

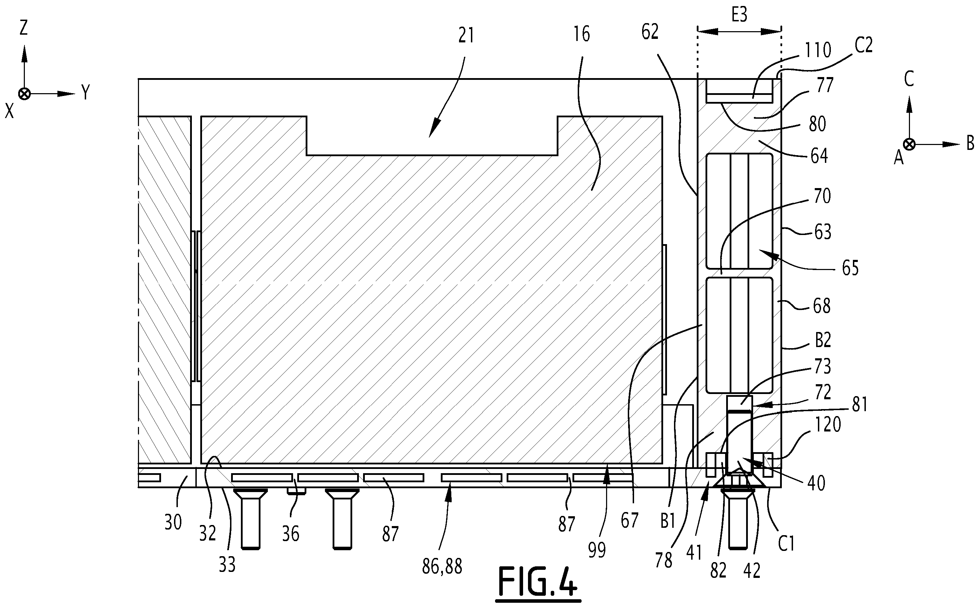

Le coffre 20 comprend en outre un circuit 85 (visible sur les figures 3 et 4) de refroidissement de l'au moins un assemblage 14 de modules électrochimiques 16 de batterie.

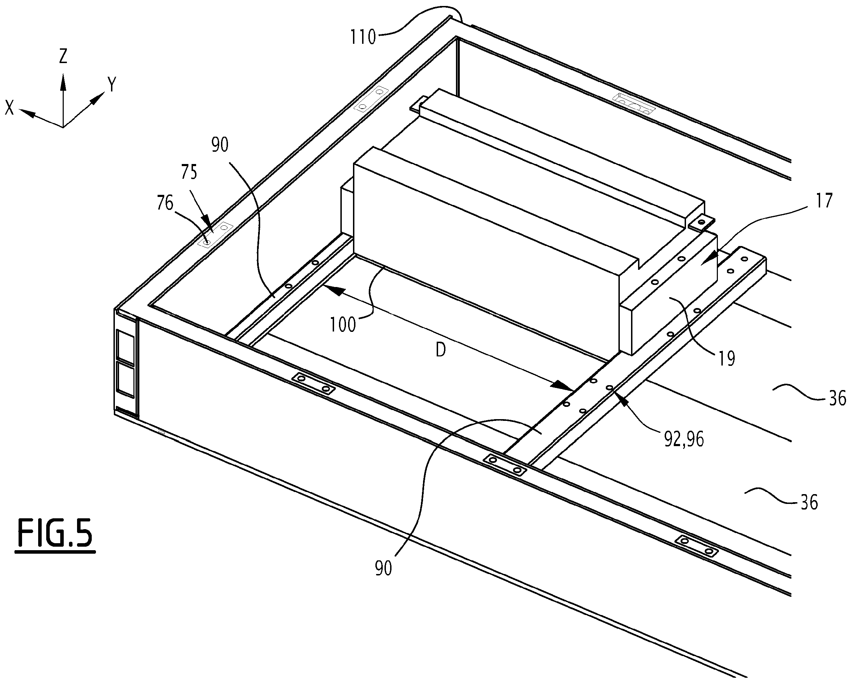

Avantageusement, le coffre 20 comprend en outre au moins un tasseau 90 (visible sur la figure 5), notamment configuré pour supporter l'au moins un assemblage 14 de modules électrochimiques 16 de batterie. Le coffre 20 comprend en particulier une pluralité de tasseaux 90.

Encore avantageusement, le coffre 20 comprend en outre au moins une couche de pâte thermique 100 (visible sur la figure 5), disposée notamment entre le support inférieur 30 et un module électrochimique 16 de batterie.

Encore avantageusement, le coffre 20 comprend en outre au moins un joint d'étanchéité supérieur 110 (visible sur les figures 1, 3 et 4) agencé entre le capot supérieur 50 et les cloisons latérales 60. Notamment, le coffre 20 comprend un unique joint d'étanchéité supérieur 110 agencé entre le capot supérieur 50 et chacune des cloisons latérales 60.

Encore avantageusement, le coffre 20 comprend en outre au moins un joint d'étanchéité inférieur 120 (visible sur les figures 3 et 4) agencé entre le support inférieur 30 et les cloisons latérales 60. Notamment, le coffre 20 comprend un unique joint d'étanchéité inférieur 120 agencé entre le support inférieur 30 et chacune des cloisons latérales 60.

Encore avantageusement, le coffre 20 comprend une plaque de protection 130 (visible sur les figures 1 et 2) s'étendant sur le support inférieur 30.

Chaque module électrochimique de batterie 16 contenu dans le coffre comporte une pluralité d'éléments électrochimiques 18 de batteries (ou cellules, désignés par le terme anglais « cell »). Un élément électrochimique est un assemblage d'électrodes, d'électrolyte, de conteneur, de bornes et généralement de séparateurs, qui est une source d'énergie électrique obtenue par transformation directe d'énergie chimique. Un élément électrochimique de batterie est représenté schématiquement sur la figure 3.

Les éléments électrochimiques de batterie 18 sont par exemple des éléments électrochimiques prismatiques, avec notamment une forme générale de parallélépipède, en particulier parallélépipède rectangle, ou des poches (« pouch » en anglais).

Comme indiqué plus haut, l'ensemble 10 est particulièrement adapté à recevoir des éléments électrochimiques de batterie au lithium, notamment des éléments électrochimiques rechargeables de batterie lithium ion.

Comme il sera décrit plus en détails ci-dessus, chaque module électrochimique de batterie 16 est fixé sur un support inférieur 30 du coffre 20. Notamment, chaque module électrochimique de batterie 16 est fixé sur au moins un tasseau 90 lui-même fixé sur le support inférieur 30 du coffre 20. En particulier, comme illustré sur l'exemple de la figure 5, les modules électrochimiques de batterie 16 d'un même assemblage 14 sont tous fixés à un même tasseau 90, ou sur deux même tasseaux 90 voisins, de préférence par vissage.

Avantageusement, chaque module électrochimique de batterie 16 comprend des moyens de fixation 17 (visibles sur la figure 5) destinés à coopérer avec des moyens de fixation complémentaires 92 d'au moins un tasseau 90. Notamment, les moyens de fixations 17 comprennent un module électrochimique de fixation 19 comprenant au moins un trou traversant et au moins une vis (non-illustrée) s'étendant dans lesdits trous traversant.

Comme illustré sur les figures 2 à 4, chaque module électrochimique de batterie 16, notamment lorsqu'il est monté sur l'au moins un tasseau 90, est séparé du support inférieur 30 par un espace intermédiaire 99 qui, comme il sera détaillé plus bas, est rempli d'une couche de pâte thermique 100 destinée à augmenter la conductivité thermique entre le module électrochimique 16 et le support 30.

Les modules électrochimiques de batterie 16 sont par exemple organisés suivant l'une des configurations électriques suivantes : 1P12S, 2P6S, 3P4S, 4P3S.

Le support inférieur 30 s'étend sensiblement selon un plan de support S parallèle à la direction longitudinale X et à la direction transversale Y.

Le support inférieur 30 comprend une surface interne 32 orientée vers l'espace 21 de réception de l'au moins un assemblage 14 de modules électrochimiques 16 de batterie et une surface externe 33 opposée à la surface interne 32.

Par exemple, notamment lorsque le coffre 20 est dépourvu de plaque de protection 130, la surface externe 33 du support inférieur 30 définit la première extrémité verticale 26.

Avantageusement, la surface interne 32 du support inférieur 30 est sensiblement plane.

Encore avantageusement, la surface externe 33 du support inférieur 30 est sensiblement plane.

Le support inférieur 30 présente avantageusement une épaisseur E1 (illustrée sur la figure 2), mesurée selon la direction verticale Z, entre la surface interne 32 et la surface externe 33 du support inférieur 30, comprise entre 6 mm et 7 mm. Cette caractéristique permet d'obtenir une protection satisfaisante vis-à-vis du feu notamment conforme au critère E15 selon la norme EN45545 (tenue au feu 15 min sans sortie de flamme).

Comme décrit plus en détails plus bas, le support inférieur 30 délimite un réseau 86 de cavités 87 de circulation d'un fluide de refroidissement, avantageusement de section allongée horizontalement, qui appartient au circuit de refroidissement 85. Le fluide de refroidissement est de préférence un liquide de refroidissement.

Comme visible sur les figures 3 à 5, le support inférieur 30 comprend une pluralité de plaques 36 s'étendant côte à côte chacune selon le plan de support S. Grâce à cette caractéristique, il est possible de moduler le nombre de plaques 36 en fonction de la taille souhaitée pour le coffre 20.

Comme illustré sur les figures 3 à 5, les plaques 36 s'étendent selon la direction longitudinale X.

Les plaques 36 sont soudées les unes aux autres.

Chaque plaque 36 comprend une portion 88 du réseau 86 de cavités 87. Les cavités 87 présentent une section droite circulaire, ovale ou polygonale, notamment rectangulaire. La portion 88 du réseau 86 de cavités 87 est notamment creusée dans la plaque 36.

Avantageusement, les plaques 36 sont soudées entre elles par leurs extrémités par l'intermédiaire de plaques terminales assurant le raccordement fluidique entre les cavités suivant le réseau 86 de circulation souhaité.

De préférence, les plaques 36 sont réalisées par extrusion de profilés.

Grace à la structure décrite dans les paragraphes ci-dessus, le support inférieur 30 remplit plusieurs fonctions. Il assure le refroidissement des modules électrochimiques 16 et des éléments électrochimiques de batterie 18 au sein des modules électrochimiques 16. Le support inférieur 30 ferme en outre de manière étanche l'espace interne 21 vers le bas. Il assure aussi une fonction de support mécanique des modules électrochimiques 16, et également garantit une résistance au feu, tout en offrant une hauteur et une masse réduite.

Les cloisons latérales 60 sont fixées au support inférieur 30 par vissage.

Par exemple, au moins une plaque 36, notamment chaque plaque 36, comprend des moyens de fixation 40 destinés à coopérer avec des moyens de fixation complémentaires 72 des cloisons latérales 60 pour assurer une fixation entre le support inférieur 30 et les cloisons latérales 60.

Par exemple, les moyens de fixation 40 comprennent une pluralité de trous traversant 41 creusés dans la plaque 36 et une pluralité de vis 42 s'étendant dans les trous traversant 41.

Le support inférieur 30 est également fixé à la plaque de protection 130, notamment par vissage.

Le capot supérieur 50 s'étend sensiblement selon un plan de capot C parallèle au plan de support S.

Le capot supérieur 50 comprend une surface interne 52 orientée vers l'espace de réception 21 et une surface externe 53 opposée à la surface interne 52.

Avantageusement, la surface interne 52 et la surface externe 53 du capot supérieur 50 sont sensiblement parallèles entre elles et sensiblement planes.

Le capot supérieur 50 présente avantageusement une épaisseur E2 (illustrée sur la figure 2), mesurée selon la direction verticale Z entre la surface interne 52 et la surface externe 53 du capot supérieur 50, comprise entre 1,5 mm et 5,0 mm. Cette caractéristique permet d'obtenir une protection satisfaisante vis-à-vis des incendies notamment conforme au critère E15 selon la norme EN45545 (tenue au feu 15 min sans sortie de flamme).

Par exemple, le capot supérieur 50 comprend au moins une plaque 56 s'étendant selon le plan de capot C.

Encore avantageusement, le capot supérieur 50 est fixé aux cloisons latérales 60, notamment par vissage.

Par exemple, l'au moins une plaque 56 du capot supérieur 50 comprend des moyens de fixation 57 destinés à coopérer avec des moyens de fixation complémentaires 75 des cloisons latérales 60 pour assurer une fixation entre le capot supérieur 50 et les cloisons latérales 60.

Par exemple, les moyens de fixation 57 comprennent une pluralité de trous traversant 58 creusés dans la plaque 56 et une pluralité de vis 59 s'étendant dans les trous traversant 58.

Les cloisons latérales 60 s'étendent depuis le support inférieur 30 jusqu'au capot supérieur 50 selon la direction verticale Z.

Chaque cloison latérale 60 comprend une surface interne 62 orientée vers l'espace de réception 21 et une surface externe 63 opposée à la surface interne 62.

La surface interne 62 et la surface externe 63 de chaque cloison latérale 60 sont sensiblement parallèles entre elles et sensiblement planes. Cette caractéristique, notamment la géométrie très simple de la cloison latérale 60 en particulier de sa surface externe 63 facilite l'installation sur l'ensemble d'accessoires externes tels que par exemple des éléments de fixation de l'ensemble, des boîtiers d'alimentation, des joints externes d'étanchéité (les joints externes d'étanchéité assurant une étanchéité conforme aux normes IP65 et/ou IP66).

En référence aux figures 1 et 2, les surfaces externes 63 des cloisons latérales 60 sensiblement perpendiculaires à la direction longitudinale X définissent les première 22 et deuxième 23 extrémités longitudinales du coffre 20 et les surfaces externes 63 des cloisons latérales 60 sensiblement perpendiculaires à la direction transversale Y définissent les première 24 et deuxième 25 extrémités transversales du coffre 20.

En référence à la figure 4, chaque cloison latérale 60 s'étend :
- selon une direction locale longitudinale A entre une première extrémité longitudinale A1 et une deuxième extrémité longitudinale A2 ;
- selon une direction locale transversale B entre une première extrémité transversale B1 et une deuxième extrémité transversale B2 ; et
- selon une direction locale verticale C entre une première extrémité verticale C1 et deuxième extrémité verticale C2.

Comme illustré sur la figure 4, la direction locale verticale C est parallèle à la direction verticale Z.

Pour chaque cloison latérale 60, la direction locale longitudinale A correspond à la direction longitudinale X ou transversale Y selon laquelle la cloison latérale 60 présente la plus grande dimension (relativement à la dimension selon la direction locale transversale B) et la direction locale transversale B correspond à la direction longitudinale X ou transversale Y selon laquelle la cloison latérale présente la plus petite dimension (relativement à la dimension selon la direction locale longitudinale A).

La direction locale longitudinale A de la cloison latérale 60 visible en coupe sur la figure 4 correspond à la direction longitudinale X.

La direction locale transversale B de la cloison latérale 60 visible en coupe sur la figure 4 correspond à la direction transversale Y.

La surface interne 62 et la surface externe 63 de chaque cloison latérale 60 s'étendent avantageusement sensiblement parallèlement aux directions locales longitudinale A et verticale C.

La surface interne 62 et la surface externe 63 de chaque cloison latérale 60 est séparée par une épaisseur E3 (illustrée sur la figure 4) prise sensiblement orthogonalement à ladite surface interne 62 et à ladite surface externe 63, par exemple autrement dit selon la direction locale transversale B, comprise avantageusement entre 20 mm et 40mm, notamment entre 27 mm et 29 mm. Cette caractéristique permet d'obtenir une protection satisfaisante vis-à-vis des incendies, notamment conforme au critère E15 selon la norme EN45545 (tenue au feu 15 min sans sortie de flamme).

Chaque cloison latérale 60 comprend notamment un corps 64 et définit au moins un espace interne creux 65.

Chaque cloison latérale 60, notamment le corps 64 de ladite cloison latérale 60, comprend une paroi interne 67 et une paroi externe 68 séparées, notamment selon la direction locale transversale B, par l'espace interne creux 65.

L'espace interne creux 65 est notamment défini par l'espace vide de matière situé entre la paroi interne 67 et la paroi externe 68 selon la direction locale transversale B. L'espace interne creux 65 permet d'alléger la cloison latérale 60 et améliore également la résistance de la cloison latérale 60 au feu, en étant conforme au critère E15 selon la norme EN45545 (tenu au feu 15 min sans sortie de flamme).

La paroi interne 67 définit la surface interne 62 de la cloison latérale 60 et la paroi externe 68 définit la surface externe 63 de la cloison latérale 60.

Avantageusement, chaque cloison latérale 60, notamment le corps 64 de ladite cloison latérale 60, comprend au moins une traverse 70 s'étendant depuis la paroi interne 67 jusqu'à la paroi externe 68 dans l'espace interne creux 65, notamment selon la direction locale transversale B. La traverse 70 renforce mécaniquement la cloison latérale 60 en constituant un point de solidarisation entre la paroi interne 67 et la paroi externe 68.

De préférence, la traverse 70 est venue de matière avec les parois interne 67 et externe 68 de la cloison latérale 60.

Avantageusement, chaque cloison latérale 60 est fixée à deux cloisons latérales 60 adjacentes par vissage. Notamment, comme illustré sur la figure 2, les cloisons latérales 60 comprennent des moyens de fixation 140 pour assurer la fixation des cloisons latérales 60 les unes aux autres.

Par exemple, les moyens de fixation 140 comprennent une pluralité de cavités cylindriques taraudées 141 et une pluralité de vis 142 coopérant avec les cavités cylindriques taraudées 141.

Chaque cloison latérale 60 est fixée au support inférieur 30 par vissage.

Notamment, chaque cloison latérale 60 comprend des moyens de fixation complémentaires 72 destinés à coopérer avec des moyens de fixation 40 du support inférieur 30 pour assurer la fixation entre ladite cloison latérale 60 et le support inférieur 30.

Par exemple, comme illustré sur la figure 4, les moyens de fixation complémentaires 72 comprennent une pluralité de cavités cylindriques taraudées 73 coopérant avec les vis 42.

Encore avantageusement, chaque cloison latérale 60 est fixée au capot supérieur 50 par vissage.

Notamment, chaque cloison latérale 60 comprend des moyens de fixation complémentaires 75 (visibles sur la figure 5) destinés à coopérer avec des moyens de fixation 57 du capot supérieur 50 pour assurer la fixation entre ladite cloison latérale 60 et le capot supérieur 50.

Par exemple, les moyens de fixation complémentaires 75 comprennent une pluralité de cavités cylindriques taraudées 76 coopérant avec les vis 59.

Notamment, comme illustré sur la figure 4, chaque cloison latérale 60, notamment le corps 64 de ladite cloison latérale 60, comprend une portion de fixation supérieure 77 à la première extrémité verticale C1 et une portion de fixation inférieure 78 à la deuxième extrémité verticale C2.

Les portions de fixation supérieure 77 et inférieure 78 s'étendent entre la paroi interne 67 et la paroi externe 68. Avantageusement, la portion de fixation supérieure 77 s'étend au-dessus de la traverse 70 à l'écart de celle-ci, et la portion de fixation inférieure s'étend au-dessous de la traverse à l'écart de celle-ci. L'espace interne creux 65 est présent de part et d'autre de la traverse 70 entre la traverse et respectivement la portion de fixation supérieure 77 et la portion de fixation inférieure 78.

La portion de fixation supérieure 77 comprend les moyens de fixation complémentaires 75 et la portion de fixation inférieure 78 comprend les moyens de fixation complémentaires 72.

Comme illustré sur l'exemple de la figure 4, selon une section droite d'une cloison latérale 60, le rapport de l'aire occupée par de la matière sur l'aire totale de la section droite est compris entre 45% et 50%. La section droite de la cloison latérale 60 est une section de la cloison latérale 60 prise selon un plan parallèle aux directions locales transversale B et verticale Z (le plan de coupe de la figure 3 sur l'exemple de la figure 3). L'aire occupée par de la matière correspond à l'aire de la section du corps 64 de la cloison latérale 60. La surface totale de la section droite correspond à l'ensemble de la surface de la section droite correspondant au corps 64 et à l'espace interne creux 65.

Avantageusement, chaque cloison latérale 60 comprend au moins une gouttière de réception d'un joint d'étanchéité 110, 120.

Selon l'exemple illustré sur les figures 3 et 4, chaque cloison latérale 60 comprend une gouttière supérieure 80 de réception du joint d'étanchéité supérieur 110 et une gouttière inférieure 81 de réception du joint d'étanchéité inférieur 120.

La gouttière supérieure 80 est agencée à la première extrémité verticale C1 de la cloison latérale 60 entre la paroi interne 67 et la paroi externe 68 et la gouttière inférieure 81 est agencée à la deuxième extrémité verticale C2 de la cloison latérale 60 entre la paroi interne 67 et la paroi externe 68.

La gouttière supérieure 80 est délimitée par la paroi interne 67, la paroi externe 68 et la portion de fixation supérieure 77.

La gouttière inférieure 81 est délimitée par la paroi interne 67, la paroi externe 68 et la portion de fixation inférieure 78.

Avantageusement, comme illustré sur l'exemple de la figure 4, les cavités cylindriques taraudées des moyens de fixation complémentaires 72, 75 débouchent respectivement dans les gouttières supérieure 80 ou inférieure 81.

En référence à la figure 4, chaque cloison latérale 60 comprend par exemple également au moins une pièce de continuité de masse 82 agencée dans la gouttière inférieure 81 de sorte à former un contact électrique d'aire minimale définie entre ladite cloison latérale 60, notamment la portion de fixation inférieure 78, et le support inférieur 30.

Par exemple, comme illustré sur l'exemple de la figure 3, la pièce 82 est un anneau agencé autour d'une vis 42 d'un moyen de fixation 40 du support inférieur 30.

Chaque cloison latérale 60 comprend par exemple également au moins une pièce de continuité de masse (non-illustrée) agencée dans la gouttière supérieure 80 de sorte à former un contact électrique entre ladite cloison latérale 60, notamment la portion de fixation supérieure 77, et le capot supérieur 50.

Selon l'exemple illustré sur les figures 1, 3 et 4, chaque cloison latérale 60 comprend des moyens de fixation 44 destinés à coopérer avec des moyens de fixation complémentaires 75 d'une autre cloison latérale 60 située en dessous selon la direction verticale Z pour assurer une fixation entre elles.

Par exemple, les moyens de fixation 44 comprennent une pluralité de pions 46 coopérant avec les cavités cylindriques taraudées 76.

Selon un exemple non-illustré, au moins une cloison latérale 60 comprend un orifice traversant (non-illustré) s'étendant depuis la surface interne 62 jusqu'à la surface externe 63. Un tel orifice est par exemple un orifice de passage de câble et/ou de connectique.

La structure et la géométrie très simple des cloisons latérales 60 facilite leur placement dans l'espace disponible pour recevoir le ou les ensembles de batterie 12, notamment au sein d'un véhicule, en particulier au sein d'un véhicule ferroviaire. Elle permet aussi une connexion très simple des accessoires externes à l'ensemble, notamment mécaniquement, électriquement et hydrauliquement (notamment pour le refroidissement).

Malgré la simplicité de structure et de géométrie, les cloisons latérales 60 sont très robustes, et permettent donc de superposer plusieurs ensembles 12 les uns sur les autres avec un encombrement réduit.

Cette structure et cette géométrie peuvent être utilisées pour des dimensionnements très variables d'ensembles 12, ce qui permet d'éviter d'avoir à requalifier chaque ensemble 12 de dimension différente.

En référence aux figures 3 et 4, le circuit de refroidissement 85 comprend un fluide de refroidissement et le réseau 86 de cavités 87 de circulation du fluide de refroidissement. Il est raccordé à un ensemble de mise en circulation du fluide de refroidissement.

Le fluide de refroidissement est par exemple un liquide de refroidissement comprenant de l'eau et du glycol.

Comme expliqué ci-dessus, le réseau 86 de cavités 87 s'étend dans le support inférieur 30, notamment dans l'au moins une plaque 36 du support inférieur 30.

Le réseau 86 de cavités cylindrique 87 comprend l'ensemble des portions 88 du réseau 86 de cavités 87 de chaque plaque 36.

En référence à la figure 5, chaque tasseau 90 est fixé sur la surface interne 32 du support inférieur 30.

Chaque tasseau 90 s'étend selon la direction longitudinale X ou selon la direction transversale Y. Selon l'exemple des figures 1 à 5, les tasseaux 90 s'étendent selon la direction longitudinale Y dans un plan sensiblement parallèle au plan de support S et chaque tasseau 90 est séparé des tasseaux 90 voisins par une distance D.

Chaque tasseau 90 est un support pour au moins un module électrochimique 16 de batterie d'un assemblage 14. Notamment, chaque tasseau 90 est un support pour l'ensemble des modules électrochimiques 16 de batterie d'un même assemblage 14.

Chaque tasseau 90 comprend des moyens de fixation complémentaires 92, 96 destinés à coopérer avec les moyens de fixation 17 des modules électrochimiques 16 de batterie pour assurer une fixation entre ledit tasseau 90 et les modules électrochimiques 16 de batteries. Par exemple, les moyens de fixations complémentaires 92, 96 comprennent au moins une cavité cylindrique taraudée 94 creusée dans le tasseau 90 et au moins une vis (non-illustrée) coopérant avec l'au moins une cavité cylindrique taraudée 94. L'au moins une vis s'étend dans un trou traversant de moyens de fixation 17 d'un module électrochimique 16 et dans une cavité cylindrique taraudée 94.

En référence à la figure 5, une couche de pâte thermique 100 est agencée entre le support inférieur 30 et chaque module électrochimique de batterie 16. La couche de pate thermique 100 comble l'espace 99 entre le support inférieur 30 et chaque module électrochimique de batterie 16. Typiquement, l'espace 99 présente une épaisseur, mesurée selon la direction verticale Z, comprise entre 0,5 mm et 2 mm, notamment sensiblement égale à 1 mm.

La couche de pâte thermique 100 permet une bonne conduction de la chaleur depuis le module électrochimique de batterie 16 jusqu'au support inférieur 30, notamment jusqu'au circuit de refroidissement 85. La couche de pâte thermique 100 améliore donc l'évacuation de chaleur depuis les modules électrochimiques de batterie 16. Elle présente de préférence une conductivité thermique supérieure à 1 W/mK.

En référence aux figures 1, 3, 4 et 5, le joint d'étanchéité supérieur 110 assure l'étanchéité entre le capot supérieur 50 et les cloisons latérales 60.

Comme illustré sur l'exemple de la figure 1, le joint d'étanchéité supérieur 110 présente une forme de rectangle.

Notamment, le joint d'étanchéité supérieur 110 est agencé dans la gouttière supérieure 80 de chaque cloison latérale 60.

En référence aux figures 3 et 4, le joint d'étanchéité inférieur 120 assure l'étanchéité entre le support inférieur 30 et les cloisons latérales 60.

Le joint d'étanchéité inférieur 120 présente notamment une forme de rectangle.

Notamment, le joint d'étanchéité inférieur 120 est agencé dans la gouttière inférieure 81 de chaque cloison latérale 60.

En référence aux figures 1 et 2, la plaque de protection 130 s'étend sur la surface externe 33 du support inférieur 30.

La plaque de protection 130 est par exemple réalisée en métal, notamment en aluminium.

La plaque de protection 130 permet de protéger le support inférieur 30 du coffre 20 vis-à-vis d'élément externes à l'ensemble de batterie 12. Par exemple, dans l'exemple spécifique où l'ensemble de batterie 12 est installé sous un véhicule ferroviaire, la plaque de protection 130 permet de protéger le support inférieur 30 du coffre 20 vis-à-vis d'éventuelles projections de ballast.

Sur l'exemple des figures 1 et 2, la plaque de protection 130 définit la première extrémité verticale 26 du coffre 20.

Avantageusement, la plaque de protection 130 comprend des moyens de fixation 132 destinés à coopérer avec des vis solidaires des cloisons latérales 60. Notamment, les moyens de fixation 132 de la plaque de protection 130 comprennent une pluralité de colonnettes 134 serties comportant un taraudage coopérant avec les vis solidaires des cloisons latérales pour fixer la plaque de protection 130 aux cloisons latérales.

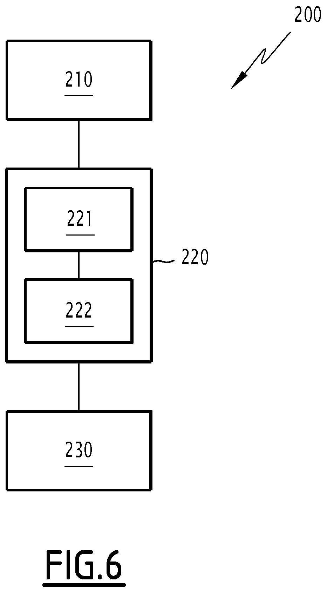

En référence à la figure 6, on décrit également un procédé 200 de fabrication de l'ensemble de batterie 12. Les dimensions et le nombre d'ensembles de batterie 12 à superposer sont choisis préalablement à la fabrication, en fonction de l'espace de disponible à l'endroit où l'ensemble de batterie va être installé.

Le procédé 200 comprend une première étape 210 de fourniture d'au moins un assemblage 14 de modules électrochimiques 16 de batterie.

Le procédé 200 comprend en outre une deuxième étape 220 de fourniture des composants du coffre 20.

La deuxième étape 220 comprend la réalisation 221 des cloisons latérales 60 par extrusion. Grâce à cette caractéristique, les cloisons latérales 60 sont réalisées facilement, à l'aide d'un outillage simple et peu coûteux. Il comprend avantageusement la réalisation de passages traversant à travers les cloisons latérales 60 en fonction des accessoires devant être raccordés à l'ensemble 12.

Avantageusement, la deuxième étape 220 comprend en outre la réalisation 222 du support inférieur 30 par soudage de plaques 36 les unes aux autres.

Le procédé 200 comprend en outre une troisième étape 230 de fabrication de l'ensemble de batterie 12 par assemblage, de préférence par vissage, du support inférieur 30, des cloisons latérales 60 et du capot supérieur 50 et par agencement de l'au moins un assemblage 14 de modules électrochimiques 16 de batterie dans l'espace de réception 21.

Il comprend ensuite le raccordement mécanique, électrique et fluidique de l'ensemble 12 aux accessoires externes.

Selon une variante non-illustrée, le coffre 20 comprend, en remplacement de la couche de pâte thermique 100, un pad thermique. Ce pad thermique présente de préférence une conductivité thermique supérieure à 1 W/mK.

Grace à la structure simple de l'ensemble 12 et de ses cloisons latérales 60, de nombreux accessoires externes sur peuvent être agencés sur l'ensemble de batterie tout en réduisant tant que possible l'encombrement et en simplifiant la connectique grâce aux surfaces extérieures planes, notamment lorsque l'ensemble de batterie est embarqué dans un véhicule. La superposition de plusieurs ensembles l'un sur l'autre est en outre possible (par exemple entre 2 à 4 ensembles 12 l'un sur l'autre), permettant d'utiliser au mieux l'espace disponible.

En outre, l'agencement géométrique des cloisons latérales 60 permet leur fixation sur le support inférieur 30 et entre elles par simple vissage, ce qui simplifie le procédé de fabrication, tout en conservant une robustesse élevée.

Comme indiqué plus haut, la structure et la géométrie des cloisons latérales 60, qui sont équilibrées en terme de poids et de raideur, permettent de moduler très simplement les dimensions de l'ensemble 12 pour l'adapter à l'espace dans lequel il est reçu, en limitant voire en supprimant les requalifications nécessaires, notamment en terme de contraintes mécaniques, de résistance au feu, de refroidissement et plus généralement de sécurité. Ceci limite les coûts de conception, tout en répondant aux normes de résistance au feu (par exemple EN455545-3) ou de résistance aux chocs et aux vibrations (EN 12663 et IEC 61373).

Avantageusement, le même profilé extrudé peut être utilisé pour former les cloisons latérales 60 d'un premier ensemble de batterie 12 et d'un deuxième ensemble de batterie 12, le premier ensemble de batterie 12 ayant au moins une dimension, notamment une longueur, une largeur ou/et une hauteur, différente d'au moins 5% de la dimension correspondante du deuxième ensemble de batterie 12.

## Revendications

1. Ensemble de batterie (12) comprenant :
- au moins un assemblage (14) de modules électrochimiques de batterie (16), chaque module électrochimique de batterie (16) comportant une pluralité d'éléments électrochimiques de batterie (18) ; et
- un coffre (20) de réception de l'au moins un assemblage (14), comportant :
+ un support inférieur (30) s'étendant sensiblement selon un plan de support (S) parallèle à une direction longitudinale (X) et à une direction transversale (Y) ;
+ un capot supérieur (50) s'étendant sensiblement selon un plan de capot (C) parallèle au plan de support (S) ; et
+ des cloisons latérales (60) s'étendant depuis le support inférieur (30) jusqu'au capot supérieur (50) selon une direction verticale (Z) sensiblement orthogonale aux directions longitudinale (X) et transversale (Y) ;
le support inférieur (30), le capot supérieur (50) et les cloisons latérales (60) délimitant entre eux un espace de réception (21) de l'au moins un assemblage (14) de modules électrochimiques de batterie (16),
le support inférieur (30) comprenant une surface interne (32) orientée vers l'espace de réception (21) et une surface externe (33) opposée à ladite surface interne (32),
chaque cloison latérale (60) comprenant une surface interne (62) orientée vers l'espace de réception (21) et une surface externe (63) opposée à ladite surface interne (62),
la surface interne (62) et la surface externe (63) de chaque cloison latérale (60) étant sensiblement parallèles entre elles et sensiblement planes, chaque cloison latérale (60) comprenant une paroi interne (67) et une paroi externe (68) séparées par un espace interne creux (65), la paroi interne (67) définissant la surface interne (62) de la cloison latérale (60), la paroi externe (68) définissant la surface externe (63) de la cloison latérale (60),
**caractérisé en ce que** chaque cloison latérale (60) est fixée au support inférieur (30) par vissage,
les cloisons latérales (60) étant fixées les unes aux autres par vissage,
le coffre (20) comprenant un circuit (85) de refroidissement de l'au moins un assemblage (14) de modules électrochimiques de batterie (16), le circuit de refroidissement (85) comprenant un réseau (86) de cavités (87) de circulation d'un fluide de refroidissement, le réseau (86) de cavités (87) s'étendant dans le support inférieur (30), les cavités (87) présentant de préférence une section droite rectangulaire,
le support inférieur (30) comprenant une pluralité de plaques (36) s'étendant côte à côte chacune selon le plan de support (S), les plaques (36) étant soudées les unes aux autres, chaque plaque (36) comprenant une portion (88) du réseau (86) de cavités (87).

2. Ensemble de batterie (12) selon la revendication 1, dans lequel chaque cloison latérale (60) comprend au moins une traverse (70) s'étendant depuis la paroi interne (67) jusqu'à la paroi externe (68) dans l'espace creux (65), la traverse (70) étant de préférence venue de matière avec les paroi interne (67) et externe (68) de la cloison latérale (60).

3. Ensemble de batterie (12) selon la revendication 1 ou 2, dans lequel, selon une section droite d'une cloison latérale (60), le rapport de l'aire occupée par de la matière sur l'aire totale de la section droite est compris entre 45% et 50%.

4. Ensemble de batterie (12) selon l'une quelconque des revendications précédentes, dans lequel le coffre de réception (20) comprend en outre au moins un tasseau (90) fixé sur la surface interne (32) du support inférieur (30), l'au moins un tasseau (90) s'étendant selon la direction longitudinale (X) ou selon la direction transversale (Y), les modules électrochimiques de batterie (16) d'un assemblage (14) étant fixés à au moins un tasseau (90), de préférence par vissage.

5. Ensemble de batterie (12) selon l'une quelconque des revendications précédentes, dans lequel chaque module électrochimique de batterie (16) est séparé du support inférieur (30) par un espace (99) rempli d'une couche de pâte thermique (100).

6. Ensemble de batterie (12) selon l'une quelconque des revendications précédentes, dans lequel le coffre (20) comprend en outre au moins un joint d'étanchéité (120) agencé entre le support inférieur (30) et les cloisons latérales (60).

7. Ensemble de batterie (12) selon l'une quelconque des revendications précédentes, dans lequel au moins l'un parmi le support inférieur (30), les cloisons latérales (60) et le capot supérieur (50) est réalisé en métal, de préférence en aluminium.

8. Ensemble de batterie (12) selon l'une quelconque des revendications précédentes, dans lequel la surface interne (62) et la surface externe (63) de chaque cloison latérale (60) est séparée par une épaisseur (E3) prise sensiblement orthogonalement à ladite surface interne (62) et à ladite surface externe (63), comprise entre 20 mm et 40 mm, notamment entre 27 mm et 29 mm.

9. Ensemble de batterie (12) selon l'une quelconque des revendications précédentes, dans lequel le coffre (20) comprend une plaque de protection (130) s'étendant sur la surface externe (33) du support inférieur (30).

10. Système (10) comprenant au moins deux ensembles de batterie (12A, 12B) selon l'une quelconque des revendications précédentes, les au moins deux ensembles de batterie (12A, 12B) étant superposés selon la direction verticale (Z), le support inférieur (30) de l'un parmi les deux ensembles de batterie (12A, 12B) étant le capot supérieur (50) de l'autre parmi les deux ensembles de batterie (12A, 12B).

11. Procédé (200) de fabrication d'au moins un ensemble de batterie selon l'une quelconque des revendications 1 à 9, comprenant les étapes suivantes :
- fourniture (210) de modules électrochimiques de batterie (16) ;
- fourniture (220) de composants du coffre de réception (20), incluant le support inférieur (30) et les cloisons latérales (60) ;
- fabrication (230) de l'ensemble de batterie (12) par assemblage, notamment par vissage, du support inférieur (30), des cloisons latérales (60) et du capot supérieur (50) et par formation et agencement de l'au moins un assemblage (14) de modules électrochimiques de batterie (16) dans l'espace de réception (21).

## Patentansprüche

1. Batterieanordnung (12) umfassend:
- mindestens einen Zusammenbau (14) von elektrochemischen Batteriemodulen (16), wobei jedes elektrochemische Batteriemodul (16) eine Vielzahl von elektrochemischen Batterieelementen (18) aufweist; und
- einen Aufnahmekasten (20) zur Aufnahme des mindestens einen Zusammenbaus (14), aufweisend:
+ einen unteren Träger (30), der sich im Wesentlichen in einer Trägerebene (S) parallel zu einer Längsrichtung (X) und zu einer Querrichtung (Y) erstreckt;
+ eine obere Abdeckung (50), die sich im Wesentlichen in einer Abdeckungsebene (C) parallel zu der Trägerebene (S) erstreckt; und
+ Seitenwände (60), die sich von dem unteren Träger (30) bis zu der oberen Abdeckung (50) in einer vertikalen Richtung (Z) erstrecken, die im Wesentlichen orthogonal zu den Längsrichtung (X) und der Querrichtungen (Y) ist;
wobei der untere Träger (30), die obere Abdeckung (50) und die Seitenwände (60) zwischen sich einen Aufnahmeraum (21) des mindestens einen Zusammenbaus (14) von elektrochemischen Batteriemodulen (16) begrenzen,
wobei der untere Träger (30) eine innere Oberfläche (32), die zu dem Aufnahmeraum (21) hin ausgerichtet ist, und eine äußere Oberfläche (33), die der genannten inneren Oberfläche (32) entgegengesetzt ist, umfasst,
wobei jede Seitenwand (60) eine innere Oberfläche (62), die zu dem Aufnahmeraum (21) hin ausgerichtet ist, und eine äußere Oberfläche (63), die der genannten inneren Oberfläche (62) entgegengesetzt ist, umfasst,
wobei die innere Oberfläche (62) und die äußere Oberfläche (63) jeder Seitenwand (60) im Wesentlichen zueinander parallel und im Wesentlichen eben sind, wobei jede Seitenwand (60) eine innere Wand (67) und eine äußere Wand (68) umfasst, die durch einen hohlen Innenraum (65) getrennt sind, wobei die innere Wand (67) die innere Oberfläche (62) der Seitenwand (60) definiert, wobei die äußere Wand (68) die äußere Oberfläche (63) der Seitenwand (60) definiert,
**dadurch gekennzeichnet, dass** jede Seitenwand (60) durch Verschrauben an dem unteren Träger (30) befestigt ist,
wobei die Seitenwände (60) durch Verschrauben aneinander befestigt sind,
wobei der Kasten (20) einen Kühlkreislauf (85) des mindestens einen Zusammenbaus (14) von elektrochemischen Batteriemodulen (16) umfasst, wobei der Kühlkreislauf (85) ein Netz (86) von Hohlräumen (87) zur Zirkulation eines Kühlfluids umfasst,
wobei sich das Netz (86) von Hohlräumen (87) in dem unteren Träger (30) erstreckt, wobei die Hohlräume (87) vorzugsweise einen rechteckigen Querschnitt aufweisen,
wobei der untere Träger (30) eine Vielzahl von Platten (36) umfasst, die sich nebeneinander jeweils in der Trägerebene (S) erstrecken, wobei die Platten (36) miteinander verschweißt sind, wobei jede Platte (36) einen Abschnitt (88) des Netzes (86) von Hohlräumen (87) umfasst.

2. Batterieanordnung (12) nach Anspruch 1, wobei jede Seitenwand (60) mindestens eine Traverse (70) umfasst, die sich von der inneren Wand (67) bis zu der äußeren Wand (68) in dem hohlen Raum (65) erstreckt, wobei die Traverse (70) vorzugsweise einstückig mit den inneren (67) und äußeren (68) Wänden der Seitenwand (60) ausgebildet ist.

3. Batterieanordnung (12) nach Anspruch 1 oder 2, wobei, in einem Querschnitt einer Seitenwand (60), das Verhältnis der von Material eingenommenen Fläche zu der Gesamtfläche des Querschnitts zwischen 45% und 50% liegt.

4. Batterieanordnung (12) nach einem der vorhergehenden Ansprüche, wobei der Aufnahmekasten (20) ferner mindestens eine Leiste (90) umfasst, die auf der inneren Oberfläche (32) des unteren Trägers (30) befestigt ist, wobei sich die mindestens eine Leiste (90) in der Längsrichtung (X) oder in der Querrichtung (Y) erstreckt, wobei die elektrochemischen Batteriemodule (16) eines Zusammenbaus (14) an mindestens einer Leiste (90) befestigt sind, vorzugsweise durch Verschrauben.

5. Batterieanordnung (12) nach einem der vorhergehenden Ansprüche, wobei jedes elektrochemische Batteriemodul (16) von dem unteren Träger (30) durch einen Raum (99) getrennt ist, der mit einer Schicht aus Wärmeleitpaste (100) gefüllt ist.

6. Batterieanordnung (12) nach einem der vorhergehenden Ansprüche, wobei der Kasten (20) ferner mindestens eine Dichtung (120) umfasst, die zwischen dem unteren Träger (30) und den Seitenwänden (60) angeordnet ist.

7. Batterieanordnung (12) nach einem der vorhergehenden Ansprüche, wobei mindestens ein Element, ausgewählt aus dem unteren Träger (30), den Seitenwänden (60) und der oberen Abdeckung (50) aus Metall hergestellt ist, vorzugsweise aus Aluminium.

8. Batterieanordnung (12) nach einem der vorhergehenden Ansprüche, wobei die innere Oberfläche (62) und die äußere Oberfläche (63) jeder Seitenwand (60) durch eine Dicke (E3) getrennt ist, die im Wesentlichen orthogonal zu der genannten inneren Oberfläche (62) und zu der genannten äußeren Oberfläche (63) genommen wird, die zwischen 20 mm und 40 mm, insbesondere zwischen 27 mm und 29 mm, liegt.

9. Batterieanordnung (12) nach einem der vorhergehenden Ansprüche, wobei der Kasten (20) eine Schutzplatte (130) umfasst, die sich auf der äußeren Oberfläche (33) des unteren Trägers (30) erstreckt.

10. System (10), umfassend mindestens zwei Batterieanordnungen (12A, 12B) nach einem der vorhergehenden Ansprüche, wobei die mindestens zwei Batterieanordnungen (12A, 12B) in der vertikalen Richtung (Z) übereinander angeordnet sind, wobei der untere Träger (30) einer der zwei Batterieanordnungen (12A, 12B) die obere Abdeckung (50) der anderen der zwei Batterieanordnungen (12A, 12B) ist.

11. Verfahren (200) zur Herstellung mindestens einer Batterieanordnung nach einem der Ansprüche 1 bis 9, umfassend die folgenden Schritte:
- Bereitstellung (210) von elektrochemischen Batteriemodulen (16);
- Bereitstellung (220) von Komponenten des Aufnahmekastens (20), einschließlich des unteren Trägers (30) und der Seitenwände (60);
- Herstellung (230) der Batterieanordnung (12) durch Zusammenbau, insbesondere durch Verschrauben, des unteren Trägers (30), der Seitenwände (60) und der oberen Abdeckung (50) sowie durch Ausbilden und Anordnen des mindestens einen Zusammenbaus (14) von elektrochemischen Batteriemodulen (16) in dem Aufnahmeraum (21).

## Claims

1. Battery assembly (12) comprising:
- at least one assembly (14) of electrochemical battery modules (16), each electrochemical battery module (16) comprising a plurality of electrochemical battery elements (18); and
- a box (20) for receiving the at least one assembly (14), comprising:
+ a lower support (30) extending substantially according to a support plane (S) parallel to a longitudinal direction (X) and to a transverse direction (Y);
+ an upper cover (50) extending substantially according to a cover plane (C) parallel to the support plane (S); and
+ lateral partitions (60) extending from the lower support (30) to the upper cover (50) according to a vertical direction (Z) substantially orthogonal to the longitudinal (X) and transverse (Y) directions;
the lower support (30), the upper cover (50) and the lateral partitions (60) delimiting between them a receiving space (21) for the at least one assembly (14) of electrochemical battery modules (16),
the lower support (30) comprising an internal surface (32) oriented toward the receiving space (21) and an external surface (33) opposite to said internal surface (32),
each lateral partition (60) comprising an internal surface (62) oriented toward the receiving space (21) and an external surface (63) opposite to said internal surface (62),
the internal surface (62) and the external surface (63) of each lateral partition (60) being substantially parallel to each other and substantially planar, each lateral partition (60) comprising an internal wall (67) and an external wall (68) separated by a hollow internal space (65), the internal wall (67) defining the internal surface (62) of the lateral partition (60), the external wall (68) defining the internal surface (63) of the lateral partition (60),
**characterized in that** each lateral partition (60) is fixed to the lower support (30) by screwing,
the lateral partitions (60) being fixed to one another by screwing,
the box (20) comprising a circuit (85) for cooling the at least one assembly (14) of electrochemical battery modules (16), the cooling circuit (85) comprising a network (86) of cavities (87) for circulation of a cooling fluid,
the network (86) of cavities (87) extending in the lower support (30), the cavities (87) preferably having a rectangular cross section,
the lower support (30) comprising a plurality of plates (36) extending side by side each according to the support plane (S), the plates (36) being welded to one another, each plate (36) comprising a portion (88) of the network (86) of cavities (87).

2. Battery assembly (12) according to claim 1, wherein each lateral partition (60) comprises at least one crosspiece (70) extending from the internal wall (67) to the external wall (68) in the hollow space (65), the crosspiece (70) preferably being formed integrally with the internal (67) and external (68) walls of the lateral partition (60).

3. Battery assembly (12) according to claim 1 or 2, wherein, according to a cross section of a lateral partition (60), the ratio of the area occupied by material to the total area of the cross section is comprised between 45% and 50%.

4. Battery assembly (12) according to any one of the preceding claims, wherein the receiving box (20) further comprises at least one cleat (90) fixed on the internal surface (32) of the lower support (30), the at least one cleat (90) extending according to the longitudinal direction (X) or according to the transverse direction (Y), the electrochemical battery modules (16) of an assembly (14) being fixed to at least one cleat (90), preferably by screwing.

5. Battery assembly (12) according to any one of the preceding claims, wherein each electrochemical battery module (16) is separated from the lower support (30) by a space (99) filled with a layer of thermal paste (100).

6. Battery assembly (12) according to any one of the preceding claims, wherein the box (20) further comprises at least one sealing gasket (120) arranged between the lower support (30) and the lateral partitions (60).

7. Battery assembly (12) according to any one of the preceding claims, wherein at least one among the lower support (30), the lateral partitions (60) and the upper cover (50) is made of metal, preferably of aluminum.

8. Battery assembly (12) according to any one of the preceding claims, wherein the internal surface (62) and the external surface (63) of each lateral partition (60) is separated by a thickness (E3) taken substantially orthogonally to said internal surface (62) and to said external surface (63), comprised between 20 mm and 40 mm, in particular between 27 mm and 29 mm.

9. Battery assembly (12) according to any one of the preceding claims, wherein the box (20) comprises a protection plate (130) extending on the external surface (33) of the lower support (30).

10. System (10) comprising at least two battery assemblies (12A, 12B) according to any one of the preceding claims, the at least two battery assemblies (12A, 12B) being superposed according to the vertical direction (Z), the lower support (30) of one among the two battery assemblies (12A, 12B) being the upper cover (50) of the other among the two battery assemblies (12A, 12B).

11. Method (200) for manufacturing at least one battery assembly according to any one of claims 1 to 9, comprising the following steps:
- providing (210) electrochemical battery modules (16);
- providing (220) components of the receiving box (20), including the lower support (30) and the lateral partitions (60);
- manufacturing (230) the battery assembly (12) by assembling, in particular by screwing, the lower support (30), the lateral partitions (60) and the upper cover (50) and by forming and arranging the at least one assembly (14) of electrochemical battery modules (16) in the receiving space (21).
